# EUROPÄISCHE PATENTANMELDUNG

(11) **EP 3 339 582 A1**
(43) Veröffentlichungstag der Anmeldung: **27.06.2018**
(21) Anmeldenummer: 17206003.0
(22) Anmeldetag: 07.12.2017
(51) Int. Cl.: F01D 25/18, F01D 9/06

(54) **TURBOMASCHINEN-DICHTUNGSANORDNUNG**

(30) Priorität: 21.12.2016 DE 102016225875
(71) Anmelder: MTU Aero Engines AG, 80995 München (DE)
(72) Erfinder: Hägert, Jan, 82239 Alling (DE)

(57) **Zusammenfassung**

Die vorliegende Erfindung betrifft eine Dichtungsanordnung für eine Turbomaschine, insbesondere eine Gasturbine, mit einer Ringnut (11-13), in der wenigstens ein Dichtring (2) zur Abdichtung eines Spaltes (S) angeordnet ist, wobei in der Ringnut wenigstens ein Spiralring (3) zur axialen Abstützung des Dichtrings (2) gegen eine erste Stirnseite (11) der Ringnut angeordnet ist.

## Beschreibung

Die vorliegende Erfindung betrifft eine Dichtungsanordnung für eine Turbomaschine, insbesondere eine Gasturbine, eine Turbomaschine, insbesondere Gasturbine, mit der Dichtungsanordnung sowie ein Verfahren zur Montage der Dichtungsanordnung.

Aus betriebsinterner Praxis ist es bekannt, geschlitzte Dichtringe, die konstruktiv Kolbenringen zur Abdichtung beweglicher Kolben entsprechen, zur Abdichtung von ortsfesten Ölleitungen in einem Turbomaschinengehäuse zu verwenden.

Dabei soll einerseits ein Innendurchmesser eines solchen Dichtrings möglichst weit in eine Ringnut eingreifen, um eine axiale Anschlagfläche zu vergrößern und so eine Belastung und damit einen Verschleiß von Dichtring und Ringnut zu minimieren.

Andererseits soll der Dichtring zur Montage möglichst wenig aufgeweitet werden müssen, insbesondere, um die Montage zu erleichtern und/oder eine übermäßige, insbesondere wenigstens teilplastische bzw. bleibende, Deformation des Dichtrings zu vermeiden und so dessen Dichtwirkung zu verbessern.

Eine Aufgabe einer Ausführung der vorliegenden Erfindung ist es, eine Dichtungsanordnung einer Turbomaschine bzw. deren Montage zu verbessern.

Diese Aufgabe wird durch eine Dichtungsanordnung mit den Merkmalen des Anspruchs 1 gelöst. Ansprüche 11, 13 stellen eine Turbomaschinemit mit wenigstens einer hier beschriebenen Dichtungsanordnung bzw. ein Verfahren zu deren Montage unter Schutz. Vorteilhafte Ausführungsformen der Erfindung sind Gegenstand der Unteransprüche.

Nach einer Ausführung der vorliegenden Erfindung weist eine Dichtungsanordnung für eine Turbomaschine, insbesondere eine Gasturbine, insbesondere wenigstens eine Dichtungsanordnung einer Turbomaschine, insbesondere Gasturbine, eine Ringnut auf, in der genau ein oder mehrere Dichtring(e) angeordnet wird/werden bzw. ist/sind, der bzw. die einen Spalt, insbesondere radialen und/oder Ringspalt, wenigstens temporär, insbesondere nur temporär oder ständig, abdichtet/abdichten bzw. hierzu vorgesehen, insbesondere eingerichtet, ist/sind bzw. verwendet wird/werden.

Nach einer Ausführung der vorliegenden Erfindung wird/werden bzw. ist/sind in der Ringnut zusätzlich genau ein oder mehrere Spiralring(e) angeordnet, der bzw. die den bzw. die Dichtring(e) axial wenigstens temporär, insbesondere nur temporär, oder ständig gegen bzw. an eine(r) erste(n) (axiale(n)) Stirnseite der Ringnut abstützt/abstützen bzw. über den/die der bzw. die Dichtring(e) sich wenigstens temporär, insbesondere nur temporär, oder ständig axial gegen bzw. an eine(r) erste(n) (axiale(n)) Stirnseite der Ringnut abstützen (können) bzw. der bzw. die hierzu vorgesehen, insbesondere eingerichtet, ist/sind bzw. verwendet wird/werden.

In einer Ausführung liegt hierzu der bzw. einer der Dichtring(e) wenigstens temporär, insbesondere nur temporär, oder ständig axial unmittelbar bzw. kontaktierend an dem bzw. einem der Spiralringe an und/oder liegt der bzw. einer der Spiralring(e) wenigstens temporär, insbesondere nur temporär, oder ständig axial unmittelbar bzw. kontaktierend an der ersten (axialen) Stirnseite der Ringnut an, in einer Weiterbildung flächig, insbesondere (jeweils) über wenigstens 15%, insbesondere wenigstens 25%, insbesondere wenigstens 50%, seiner (axialen) Stirnfläche bzw. ist (jeweils) hierzu vorgesehen, insbesondere eingerichtet.

Ein oder mehrere weitere Dichtringe können sich in einer Ausführung über diesen einen Dichtring und diesen einen Spiralring, in einer Weiterbildung zusätzlich über einen oder mehrere weitere Spiralringe, wenigstens temporär, insbesondere nur temporär, oder ständig, an der ersten (axialen) Stirnseite der Ringnut (axial) abstützen bzw. hierzu eingerichtet sein. Zusätzlich oder alternativ können auch (axial) zwischen einer der ersten (axialen) Stirnseite (axial) gegenüberliegenden zweiten (axialen) Stirnseite der Ringnut und dem bzw. einem dieser nächsten Dichtring und/oder zwischen zwei oder mehr Dichtringen (jeweils) ein oder mehrere weitere Spiralringe angeordnet sein.

Richtungsangaben beziehen sich in einer Ausführung in fachüblicher Weise auf die Ringnut, so dass eine axiale Richtung in einer Ausführung senkrecht zu einem Umfang der Ringnut und eine radiale Richtung entsprechend senkrecht zum Umfang der Ringnut und der axialen Richtung (ausgerichtet) ist.

Die Ringnut weist in einer Ausführung eine bzw. die der ersten (axialen) Stirnseite (axial) gegenüberliegende zweite (axiale) Stirnseite und einen die beiden Stirnseiten verbindenden (radialen) Nutgrund auf. Die erste und/oder zweite Stirnseite können in einer Ausführung geschlossen sein oder (jeweils) einen oder mehrere Kanäle, insbesondere Nuten, zu einer anschließenden Umfangsfläche aufweisen.

In einer Ausführung weist die Ringnut eine, wenigstens im Wesentlichen, konstante (axiale) Nutbreite und/oder (radiale) Nuttiefe auf, was insbesondere die Fertigung vereinfachen kann. In einer Ausführung verläuft die Ringnut rotationssymmetrisch (zur axialen Richtung) und in einer Weiterbildung kreisringförmig, in einer anderen Weiterbildung spiral- oder wellen- bzw. -mäanderförmig, was jeweils insbesondere eine Dichtwirkung verbessern kann.

Durch den bzw. die Spiralring(e) kann in einer Ausführung eine axiale Anschlagfläche zur Abstützung des Dichtrings bzw. eines oder mehrerer der Dichtringe vergrößert und so insbesondere eine Belastung, insbesondere Flächenpressung und/oder Kerbwirkung, und damit in einer Ausführung Verschleiß von Dichtring(en) und/oder Ringnut reduziert werden, wobei in einer Ausführung vorteilhaft zugleich eine notwendige Aufweitung zur bzw. bei der Montage reduziert und so die Montage erleichtert und/oder eine Deformation des Dichtrings bzw. eines oder mehrerer der Dichtringe reduziert und so eine Dichtwirkung verbessert werden kann.

In einer Ausführung weist die Dichtungsanordnung eine, insbesondere radial gegenüberliegende, Wandung auf, die den (Ring)Spalt, insbesondere radial außen, begrenzt, wobei in einer Weiterbildung Ringnut und Wandung, wenigstens im (regulären) Betrieb der Turbomaschine und/oder wenigstens im Wesentlichen, ortsfest zueinander, insbesondere fixiert, sind, insbesondere zerstörungsfrei lösbar oder nicht zerstörungsfrei lösbar.

Somit kann in einer Ausführung insbesondere ein stationärer bzw. ortsfester Spalt einer Turbomaschine abgedichtet werden, insbesondere durch einen oder mehrere Dichtring(e), der bzw. die Kolbenringen entspricht/entsprechen, wie sie zur Abdichtung bei beweglichen Kolben bzw. deren Ringnuten bekannt sind.

In einer Ausführung ist bzw. wird die Ringnut an einem Rohr mit einem Kanal angeordnet, der Fluid, insbesondere Öl, führt bzw. hierzu vorgesehen, insbesondere eingerichtet, ist bzw. verwendet wird ("Fluidkanal"), insbesondere also an einem Ölrohr der Turbomaschine.

Dies stellt eine besonders vorteilhafte Verwendung einer erfindungsgemäßen Dichtungsanordnung dar.

In einer Ausführung weist/weisen der bzw. einer oder mehrere der Spiralring(e jeweils) wenigstens zwei, insbesondere wenigstens drei, und/oder höchstens fünf, insbesondere höchstens vier, axial übereinander angeordnete Spiralwindungen bzw. (axiale) Lagen auf. Zusätzlich oder alternativ ist/sind in einer Ausführung der bzw. einer oder mehrere der Spiralring(e jeweils) einstückig ausgebildet, insbesondere hergestellt.

Hierdurch kann in einer Ausführung eine vorteilhafte Abstützung des bzw. der Dichtringe realisiert werden.

In einer Ausführung ist/sind der bzw. einer oder mehrere der Dichtring(e jeweils) geschlitzt, insbesondere in an sich von Kolbenringen bekannter Weise. Zusätzlich oder alternativ ist/sind in einer Ausführung der bzw. einer oder mehrere der Dichtring(e jeweils) einstückig ausgebildet, insbesondere hergestellt.

Hierdurch kann in einer Ausführung die Montage und/oder Dichtwirkung (weiter) verbessert werden.

In einer Ausführung sind der bzw. einer oder mehrere der Dichtring(e) und/oder der bzw. einer oder mehrere der Spiralring(e) aus demselben Material hergestellt. Hierdurch kann insbesondere Dynamik und/oder Verschleiß der Dichtung verbessert werden.

In einer Ausführung sind der bzw. einer oder mehrere der Dichtring(e) und/oder der bzw. einer oder mehrere der Spiralring(e) aus unterschiedlichem Material hergestellt. Hierdurch können in einer Ausführung die Funktionalitäten der Ringe verbessert, insbesondere eine Dichtwirkung des (jeweiligen) Dichtrings und/oder Abstützwirkung des (jeweiligen) Spiralrings verbessert werden.

Zusätzlich oder alternativ weist/weisen der bzw. einer oder mehrere der Dichtring(e) und/oder der bzw. einer oder mehrere der Spiralring(e jeweils) Metall auf, in einer Weiterbildung besteht er bzw. bestehen sie (jeweils) hieraus. Insbesondere kann der bzw. einer oder mehrere der Dichtring(e) Nitronic 60, Hs25 oder ähnliches Metall und/oder der bzw. einer oder mehrere der Spiralring(e) IN625 oder ähnliches Metall aufweisen, insbesondere hieraus bestehen.

Hierdurch kann in einer Ausführung die Funktionalität des (jeweiligen) Ringes verbessert, insbesondere eine Dichtwirkung des (jeweiligen) Dichtrings und/oder Abstützwirkung des (jeweiligen) Spiralrings verbessert werden.

In einer Ausführung ist ein Umfang, insbesondere Außendurchmesser, einer an die erste Stirnseite anschließenden ersten Umfangs-, insbesondere Mantelfläche, die den Spalt, insbesondere radial innen, begrenzt, kleiner als ein Umfang, insbesondere Außendurchmesser, einer den Spalt, insbesondere radial innen, begrenzenden zweiten Umfangs-, insbesondere Mantelfläche, die an die bzw. eine der ersten Stirnseite (axial) gegenüberliegende zweite Stirnseite der Ringnut anschließt, in einer Weiterbildung um wenigstes 2%, insbesondere wenigstes 5%, insbesondere wenigstes 10%, und/oder höchstens 50%, insbesondere höchstens 25%, insbesondere höchstens 15%, des (Außen)Umfangs, insbesondere Außendurchmessers, der ersten oder zweiten Stirnseite bzw. Umfangsfläche.

Zusätzlich oder alternativ ist in einer Ausführung die bzw. eine an die erste Stirnseite anschließende erste Umfangs-, insbesondere Mantelfläche, die den Spalt, insbesondere radial innen, begrenzt, und/oder die bzw. eine an die bzw. eine zweite Stirnseite, die der ersten Stirnseite (axial) gegenüberliegt, anschließende zweite Umfangs-, insbesondere Mantelfläche, die den Spalt, insbesondere radial innen, begrenzt, rotationssymmetrisch, insbesondere kegel- oder zylinderförmig, ausgebildet.

In einer Ausführung werden Dichtring(e) und/oder Spiralring(e), insbesondere nacheinander, von bzw. auf der ersten Umfangsfläche (her) bzw. in axialer Richtung von der ersten zu der zweiten Stirnseite der Ringnut her aufgeschoben bzw. in dieser angeordnet.

Hierdurch kann in einer Ausführung jeweils, insbesondere in Kombination, eine Montage (weiter) verbessert werden.

In einer Ausführung ist eine, insbesondere minimale, maximale und/oder mittlere, Innenweite, insbesondere ein Innenumfang, insbesondere -durchmesser, des bzw. eines oder mehrerer der in der Ringnut angeordneten Dichtrings bzw. Dichtringe (jeweils) kleiner als eine, insbesondere minimale, maximale und/oder mittlere, Außenweite, insbesondere ein Außenumfang, insbesondere -durchmesser, des in der Ringnut angeordneten Spiralrings bzw. eines oder mehrerer der in der Ringnut angeordneten Spiralringe, insbesondere (jeweils) um wenigstes 1%, insbesondere wenigstes 5%, insbesondere wenigstes 10%, und/oder höchstens 50%, insbesondere höchstens 25%, insbesondere höchstens 15%, dieser Innen- oder Außenweite.

Zusätzlich oder alternativ ist in einer Ausführung eine, insbesondere minimale, maximale und/oder mittlere, Innenweite, insbesondere ein Innenumfang, insbesonderedurchmesser, des bzw. eines oder mehrerer der in der Ringnut angeordneten Dichtrings bzw. Dichtringe (jeweils) kleiner als eine, insbesondere minimale, maximale und/oder mittlere, Außenweite, insbesondere ein Außenumfang , insbesonderedurchmesser, der der ersten Stirnseite gegenüberliegenden zweiten Stirnseite der Ringnut, insbesondere (jeweils) um wenigstes 1%, insbesondere wenigstes 5%, insbesondere wenigstes 10%, und/oder höchstens 50%, insbesondere höchstens 25%, insbesondere höchstens 15%, dieser Innen- oder Außenweite.

Zusätzlich oder alternativ ist in einer Ausführung eine, insbesondere minimale, maximale und/oder mittlere, Innenweite, insbesondere ein Innenumfang, insbesonderedurchmesser, des bzw. eines oder mehrerer der in der Ringnut angeordneten Spiralrings bzw. Spiralringe (jeweils) kleiner als eine, insbesondere minimale, maximale und/oder mittlere, Außenweite, insbesondere ein Außenumfang , insbesonderedurchmesser, der ersten Stirnseite der Ringnut, insbesondere (jeweils) um wenigstes 1%, insbesondere wenigstes 5%, insbesondere wenigstes 10%, und/oder höchstens 50%, insbesondere höchstens 25%, insbesondere höchstens 15%, dieser Innen- oder Außenweite. In einer Weiterbildung liegt/liegen der bzw. einer oder mehrere der in der Ringnut angeordnete(n) Spiralring(e) auf dem Nutgrund der Ringnut auf.

Zusätzlich oder alternativ ist in einer Ausführung eine, insbesondere minimale, maximale und/oder mittlere, Innenweite, insbesondere ein Innenumfang, insbesonderedurchmesser, und/oder eine, insbesondere minimale, maximale und/oder mittlere, Außenweite, insbesondere ein Außenumfang , insbesondere -durchmesser, des bzw. eines oder mehrerer der in der Ringnut angeordneten Spiralrings bzw. Spiralring (jeweils) kleiner oder, wenigstens im Wesentlichen, gleich oder größer als eine, insbesondere minimale, maximale und/oder mittlere, Außenweite, insbesondere ein Außenumfang , insbesondere -durchmesser, der zweiten Stirnseite der Ringnut, insbesondere (jeweils) um wenigstes 1%, insbesondere wenigstes 5%, insbesondere wenigstes 10%, und/oder höchstens 50%, insbesondere höchstens 25%, insbesondere höchstens 15%, dieser Innen- bzw. Außenweite.

Zusätzlich oder alternativ ist in einer Ausführung eine, insbesondere minimale, maximale und/oder mittlere, Innenweite, insbesondere ein Innenumfang, insbesonderedurchmesser, und/oder eine, insbesondere minimale, maximale und/oder mittlere, Außenweite, insbesondere ein Außenumfang , insbesondere -durchmesser, des bzw. eines oder mehrerer der in der Ringnut angeordneten Dichtrings bzw. Dichtringe (jeweils) kleiner oder, wenigstens im Wesentlichen, gleich oder größer als eine, insbesondere minimale, maximale und/oder mittlere, Außenweite, insbesondere ein Außenumfang, insbesondere -durchmesser, der ersten Stirnseite der Ringnut, insbesondere (jeweils) um wenigstes 1%, insbesondere wenigstes 5%, insbesondere wenigstes 10%, und/oder höchstens 50%, insbesondere höchstens 25%, insbesondere höchstens 15%, dieser Innen- bzw. Außenweite. In einer Weiterbildung liegt/liegen der bzw. einer oder mehrere der in der Ringnut angeordnete(n) Dichtring(e) an der der Ringnut gegenüberliegenden bzw. den Spalt begrenzenden Wandung an.

In einer Ausführung ist/sind bzw. wird/werden der bzw. einer oder mehrere der in der Ringnut angeordnete(n) Spiralring(e) axial elastisch komprimiert und/oder radial elastisch aufgeweitet.

Hierdurch kann in einer Ausführung Gewicht, Verschleiß, Montage und/oder Dichtwirkung jeweils, insbesondere in Kombination, (weiter) verbessert werden.

In einer Ausführung wird/werden bzw. ist/sind der bzw. einer oder mehrere der Spiralring(e) auf einer Seite eines höheren abzudichtenden Druckes des Dichtrings bzw. eines oder mehrerer der Dichtringe angeordnet. Hierdurch kann in einer Ausführung eine Dichtwirkung (weiter) verbessert werden.

In einer Ausführung wird/werden bzw. ist/sind der bzw. einer oder mehrere der Spiralring(e) auf einer Seite eines niedrigeren abzudichtenden Druckes des Dichtrings bzw. eines oder mehrerer der Dichtringe angeordnet. Hierdurch kann in einer Ausführung eine axiale Abstützung des bzw. der Dichtringe über den bzw. die Spiralring(e) (weiter) verbessert werden.

In einer Ausführung ist bzw. wird der Spalt, insbesondere radial außen, durch ein Gehäuse, insbesondere ein Turbinenzwischengehäuse, der Turbomaschine begrenzt.

Dies stellt eine besonders vorteilhafte Verwendung einer erfindungsgemäßen Dichtungsanordnung dar.

Nach einer Ausführung der vorliegenden Erfindung wird/werden bzw. ist/sind der bzw. die Dichtring(e), insbesondere unter wenigstens, insbesondere nur, temporärer elastischer Aufweitung, zur Abdichtung des Spaltes in der Ringnut angeordnet, wobei der bzw. einer oder mehrere der Spiralring(e jeweils), insbesondere zuvor oder anschließend, zu dessen bzw. deren axialer Abstützung in der Ringnut angeordnet wird/werden bzw. ist/sind, insbesondere unter wenigstens, insbesondere nur, temporärer elastischer Aufweitung.

Hierdurch kann in einer Ausführung eine Montage (weiter) verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

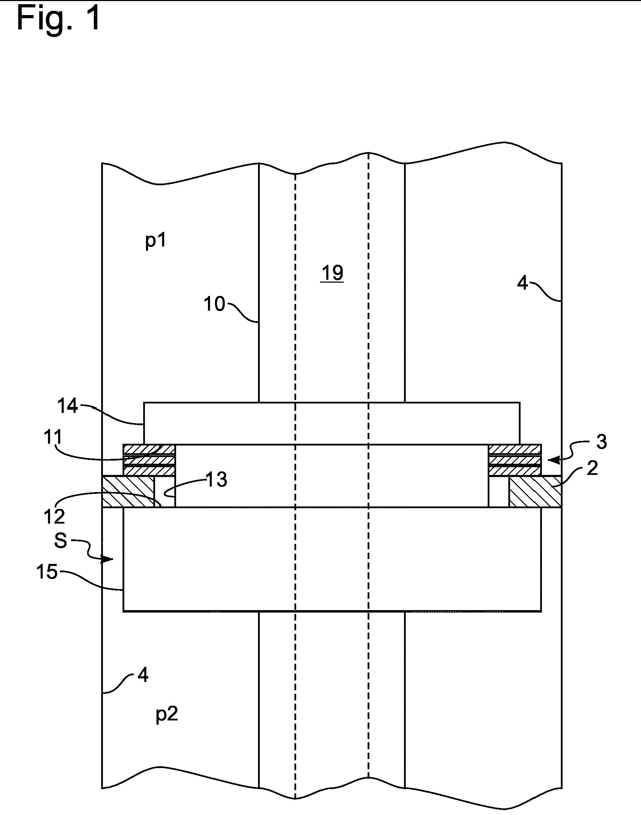

- Fig. 1: eine Dichtungsanordnung einer Turbomaschine nach einer Ausfüh-rung der vorliegenden Erfindung.

Fig. 1 zeigt eine Dichtungsanordnung einer Turbomaschine nach einer Ausführung der vorliegenden Erfindung in einem Axialschnitt.

Die Dichtungsanordnung weist eine Ringnut an einem Ölrohr 10 der Turbomaschine mit einem Fluidkanal 19 auf, die eine erste axiale Stirnseite 11, eine dieser axial (vertikal in Fig. 1) gegenüberliegende zweite axiale Stirnseite 12 und einen diese Stirnseiten 11, 12 verbindenden Nutgrund 13 aufweist.

In der Ringnut 11-13 ist ein Dichtring 2 angeordnet, der einen radialen Ringspalt S zu einer radial außenliegenden Wandung 4 eines Gehäuses der Turbomaschine abdichtet.

Zusätzlich ist in der Ringnut 11-13 ein Spiralring 3 angeordnet, der den Dichtring 2 axial gegen die bzw. an der erste(n) Stirnseite 11 der Ringnut abstützt.

Hierzu liegt wenigstens temporär der Dichtring 2 axial unmittelbar bzw. kontaktierend an dem Spiralring 3 und dieser seinerseits axial unmittelbar bzw. kontaktierend an der ersten Stirnseite 11 flächig an.

Ringnut 11-13 und Wandung 4 sind ortsfest zueinander.

Der Spiralring 3 weist drei axial übereinander angeordnete Spiralwindungen bzw. (axiale) Lagen auf und ist einstückig aus IN625 oder ähnlichem Metall ausgebildet.

Der Dichtring 2 ist in an sich von Kolbenringen bekannter Weise geschlitzt und einstückig aus Nitronic 60, Hs25 oder ähnlichem Metall ausgebildet.

Ein Umfang einer an die erste Stirnseite 11 anschließenden zylinderförmigen ersten Mantelfläche 14, die den Spalt S radial innen begrenzt, ist kleiner als ein Umfang einer den Spalt S radial innen begrenzenden zylinderförmigen zweiten Mantelfläche 15, die an die der ersten Stirnseite 11 axial gegenüberliegende zweite Stirnseite 12 der Ringnut anschließt.

Dichtring 2 und Spiralring 3 wurden nacheinander von bzw. auf der (kleineren) ersten Umfangsfläche 14 (her) bzw. in axialer Richtung von der ersten zu der zweiten Stirnseite der Ringnut her (von oben nach unten in Fig. 1) aufgeschoben bzw. in dieser angeordnet.

Ein Innendurchmesser des in der Ringnut angeordneten Dichtrings 2 ist kleiner als ein Außendurchmesser des in der Ringnut angeordneten Spiralrings 3 und auch kleiner als ein Außendurchmesser der der ersten Stirnseite 11 gegenüberliegenden zweiten Stirnseite 12 der Ringnut.

Ein Außendurchmesser des in der Ringnut angeordneten Spiralrings 3 ist im Ausführungsbeispiel im Wesentlichen gleich dem Außendurchmesser der zweiten Stirnseite 15. In einer nicht dargestellten Abwandlung kann er auch kleiner oder größer sein.

Zusätzlich ist der Innendurchmesser des in der Ringnut angeordneten Dichtrings 2 im Ausführungsbeispiel kleiner als der Außendurchmesser der ersten Stirnseite 11 der Ringnut. In einer nicht dargestellten Abwandlung kann er auch , wenigstens im Wesentlichen, gleich oder größer sein.

Der in der Ringnut angeordnete Spiralring 3 liegt auf dem Nutgrund 13 der Ringnut auf, der in der Ringnut angeordnete Dichtring 2 an der der Ringnut gegenüberliegenden bzw. den Spalt S begrenzenden Wandung 4 an.

Der in der Ringnut angeordnete Spiralring 3 ist axial elastisch komprimiert.

Der Spiralring 3 ist auf einer Seite eines höheren abzudichtenden Druckes p1 des Dichtrings 2 angeordnet (p1 > p2). In einer nicht dargestellten Abwandlung kann er auch auf einer Seite eines niedrigeren abzudichtenden Druckes p1 des Dichtrings 2 angeordnet sein (p1 < p2).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Ölrohr
- 11: erste Stirnseite der Ringnut
- 12: zweite Stirnseite der Ringnut
- 13: Ringgrund
- 14: erste Mantelfläche
- 15: zweite Mantelfläche
- 19: Fluidkanal
- 2: Dichring
- 3: Spiralring
- 4: (Gehäuse)Wandung
- S: Spalt
- p1, p2: abzudichtender

## Patentansprüche

1. Dichtungsanordnung für eine Turbomaschine, insbesondere eine Gasturbine, mit einer Ringnut (11-13), in der wenigstens ein Dichtring (2) zur Abdichtung eines Spaltes (S) angeordnet ist, wobei in der Ringnut wenigstens ein Spiralring (3) zur axialen Abstützung des Dichtrings (2) gegen eine erste Stirnseite (11) der Ringnut angeordnet ist.

2. Dichtungsanordnung nach dem vorhergehenden Anspruch, **gekennzeichnet durch** eine Wandung (4), die den Spalt (S) begrenzt, wobei Ringnut (11-13) und Wandung (4) ortsfest zueinander sind.

3. Dichtungsanordnung nach einem der vorhergehenden Ansprüche, **dadurch gekennzeichnet, dass** die Ringnut (11-13) an einem Rohr (10) mit einem Fluidkanal (19) angeordnet ist.

4. Dichtungsanordnung nach einem der vorhergehenden Ansprüche, **dadurch gekennzeichnet, dass** der Spiralring (3) wenigstens zwei und/oder höchstens fünf axial übereinander angeordnete Spiralwindungen aufweist.

5. Dichtungsanordnung nach einem der vorhergehenden Ansprüche, **dadurch gekennzeichnet, dass** der Dichtring (2) geschlitzt ist.

6. Dichtungsanordnung nach einem der vorhergehenden Ansprüche, **dadurch gekennzeichnet, dass** der Dichtring (2) und der Spiralring (3) aus demselben oder unterschiedlichem Material hergestellt sind und/oder der Dichtring (2) und/oder der Spiralring (3) Metall aufweisen.

7. Dichtungsanordnung nach einem der vorhergehenden Ansprüche, **dadurch gekennzeichnet, dass** ein Umfang einer an die erste Stirnseite (11) anschließenden ersten Umfangsfläche (14), die den Spalt (S) begrenzt, kleiner ist als ein Umfang einer den Spalt (S) begrenzenden zweiten Umfangsfläche (15), die an eine der ersten Stirnseite gegenüberliegende zweite Stirnseite (12) der Ringnut anschließt.

8. Dichtungsanordnung nach einem der vorhergehenden Ansprüche, **dadurch gekennzeichnet, dass** eine Innenweite des in der Ringnut angeordneten Dichtrings (2) kleiner als eine Außenweite des in der Ringnut angeordneten Spiralrings (3) ist und/oder kleiner als eine Außenweite einer der ersten Stirnseite gegenüberliegenden zweiten Stirnseite (12) der Ringnut ist und/oder dass eine Innenweite des in der Ringnut angeordneten Spiralrings (3) kleiner als eine Außenweite der ersten Stirnseite (11) der Ringnut ist.

9. Dichtungsanordnung nach einem der vorhergehenden Ansprüche, **dadurch gekennzeichnet, dass** der in der Ringnut angeordnete Spiralring (3) axial elastisch komprimiert und/oder radial elastisch aufgeweitet ist.

10. Dichtungsanordnung nach einem der vorhergehenden Ansprüche, **dadurch gekennzeichnet, dass** der Spiralring (3) auf einer Seite eines höheren oder niedrigeren abzudichtenden Druckes (p1) des Dichtrings angeordnet ist.

11. Turbomaschine, insbesondere Gasturbine, mit wenigstens einer Dichtungsanordnung nach einem der vorhergehenden Ansprüche.

12. Turbomaschine nach dem vorhergehenden Anspruch, **dadurch gekennzeichnet, dass** der Spalt (S) durch ein Gehäuse (4) der Turbomaschine begrenzt ist.

13. Verfahren zur Montage einer Dichtungsanordnung nach einem der vorhergehenden Ansprüche, **dadurch gekennzeichnet, dass** der Dichtring (2), insbesondere unter wenigstens temporärer elastischer Aufweitung, zur Abdichtung des Spaltes (1) in der Ringnut (11-13) angeordnet wird, wobei der Spiralring (3), insbesondere zuvor oder hieran anschließend, zur axialen Abstützung des Dichtrings in der Ringnut angeordnet wird, insbesondere unter wenigstens temporärer elastischer Aufweitung des Spiralrings.
